# EUROPEAN PATENT APPLICATION

(11) **EP 4 599 926 A1**
(43) Date of publication of application: **13.08.2025**
(21) Application number: 23896059.5
(22) Date of filing: 20.07.2023
(51) Int. Cl.: B01D 63/10, B01D 61/08, C02F 1/44, C02F 103/04

(54) **ROLLED REVERSE OSMOSIS MEMBRANE ELEMENT AND WATER PURIFIER COMPRISING SAME**

(30) Priority: 28.11.2022 CN 202211501324
(71) Applicant: Gree Electric Appliances, Inc. of Zhuhai, Zhuhai, Guangdong 519031 (CN)
(72) Inventor: CHEN, Jing, Zhuhai, Guangdong 519031 (CN); LI, Yiran, Zhuhai, Guangdong 519031 (CN); ZHAN, Ting, Zhuhai, Guangdong 519031 (CN); CHEN, Zibin, Zhuhai, Guangdong 519031 (CN); NING, Guiyong, Zhuhai, Guangdong 519031 (CN); LI, Wencan, Zhuhai, Guangdong 519031 (CN)
(74) Representative: Zacco GmbH
(86) International application number: PCT/CN2023/108322
(87) International publication number: WO 2024/113896

(57) **Abstract**

Disclosed area spiral wound reverse osmosis membrane element and a water purifier with a spiral wound reverse osmosis membrane element. The spiral wound reverse osmosis membrane element includes: a central tube (100), a first reverse osmosis membrane sheet (1), and a second reverse osmosis membrane sheet (2). The first reverse osmosis membrane sheet (1) is bent to form a first long leaf (11), a first folded edge (13), and a first short leaf (12), the second reverse osmosis membrane sheet (2) is bent to form a second long leaf (21), a second folded edge (23), and a second short leaf (22), and the first short leaf (12) and the second short leaf (22) are arranged oppositely. A part of the first long leaf (11) and the first short leaf (12) form a first raw water channel (201), a part of the second long leaf (21) and the second short leaf (22) form a second raw water channel (202), and a part of the first long leaf (11) extending beyond the first short leaf (12) and a part of the second long leaf (21) extending beyond the second short leaf (22) form a third raw water channel (203). The sum of cross-sectional circulation areas of the first raw water channel (201) and the second raw water channel (202) is greater than a cross-sectional circulation area of the third raw water channel (203). The spiral wound reverse osmosis membrane element can improve a flow velocity on a membrane surface at a concentrated water side, slow down concentration polarization at the concentrated water side, enhance anti-pollution performance of a reverse osmosis membrane, and prolong service life of a filter element of the reverse osmosis membrane.

## Description

The invention claims the priority to Chinese Patent Application No. 202211501324.4 filed with the Chinese Patent Office on November 28, 2022 and entitled "Spiral wound reverse osmosis membrane element and water purifier with same", which is incorporated in its entirety herein by reference.

### Technical Field

The invention relates to the technical field of water purifiers, and particularly relates to a spiral wound reverse osmosis membrane element and a water purifier with the spiral wound reverse osmosis membrane element.

### Background

A spiral wound reverse osmosis membrane element is a water purification element formed by winding a feed spacer, a reverse osmosis membrane sheet and a pure water guiding cloth around a central water production tube. Based on an osmosis function of the reverse osmosis membrane sheet, water molecules in raw water permeate through the reverse osmosis membrane sheet under pressure and converge on a pure water side, so as to form pure water. Meanwhile, the raw water is gradually formed into concentrated water at a concentrated water side. Finally, the concentrated water flows out of a concentrated water outlet, and the pure water flows out of a pure water outlet. As the raw water flows to the concentrated water outlet in a raw water channel, part of the raw water is changed into the pure water after filtered by a reverse osmosis membrane, and a fluid velocity on a surface of the reverse osmosis membrane sheet in the raw water channel gradually decreases. Thus, a fluid velocity on a surface of the reverse osmosis membrane is lowest at the concentrated water side. As the fluid velocity on the surface of the reverse osmosis membrane sheet gradually decreases and solute in fluid on the surface of the reverse osmosis membrane sheet gradually increases, most serious concentration polarization occurs at the concentrated water side, which is most likely to cause fouling. Generally, a reverse osmosis membrane element has an obvious concentration polarization problem at the concentrated water side, resulting in influence on service life of the membrane element.

In the related art, a water velocity on a membrane surface in the raw water channel of the spiral wound reverse osmosis membrane element gradually decreases in a flowing process, and most serious concentration polarization occurs in a downstream section in a flowing direction and is most likely to cause technical problems such as fouling. Thus, the invention studies and designs a spiral wound reverse osmosis membrane element and a water purifier with a spiral wound reverse osmosis membrane element.

### Summary

In view of that, technical problems to be solved by the invention are that most serious concentration polarization occurs in a downstream section in a flowing direction in a raw water channel of a spiral wound reverse osmosis membrane element in the art known to the inventors and is most likely to cause fouling, such that a spiral wound reverse osmosis membrane element and a water purifier with a spiral wound reverse osmosis membrane element are provided.

In order to solve the problems, the invention provides a spiral wound reverse osmosis membrane element. The spiral wound reverse osmosis membrane element includes:
a central tube, a first reverse osmosis membrane sheet, and a second reverse osmosis membrane sheet. The first reverse osmosis membrane sheet is bent to form a first long leaf, a first folded edge and a first short leaf that are sequentially connected. A length of the first long leaf is greater than a length of the first short leaf. The second reverse osmosis membrane sheet is bent to form a second long leaf, a second folded edge and a second short leaf that are sequentially connected. A length of the second long leaf is greater than a length of the second short leaf. The first short leaf and the second short leaf are disposed oppositely. The first reverse osmosis membrane sheet and the second reverse osmosis membrane sheet are stacked into a whole and then wound around the central tube.

A first raw water channel is formed between a part of the first long leaf and the first short leaf that are disposed oppositely. A second raw water channel is formed between a part of the second long leaf and the second short leaf that are disposed oppositely. A third raw water channel is formed between a part of the first long leaf extending beyond the first short leaf and a part of the second long leaf extending beyond the second short leaf that are disposed oppositely. The first raw water channel and the second raw water channel are in communication with a raw water nozzle so as to feed raw water. Water in the first raw water channel and water in the second raw water channel separately flow to the third raw water channel, and a sum of cross-sectional circulation areas of the first raw water channel and the second raw water channel is greater than a cross-sectional circulation area of the third raw water channel.

In some embodiments, in a projective plane of an axial end surface of the central tube, the first short leaf and the second short leaf have an equal length of L2, and the first long leaf and the second long leaf have an equal length of L1, L1>L2.

An end of the first short leaf and an end of the second short leaf are disposed oppositely. The first folded edge and the second folded edge are disposed oppositely. An end of the first long leaf and an end of the second long leaf are disposed oppositely.

In some embodiments, the first raw water channel and the second raw water channel are provided with water inlets on the axial end surface in an axial direction of the central tube respectively. A length of the water inlets in the projective plane of the axial end surface of the central tube is L0, and L0<L2.

In some embodiments, 1/3≤L2/L1≤3/4; and 1/10≤L0/L2≤1/2.

In some embodiments, a first feed spacer is further disposed in the first raw water channel and the third raw water channel. One end of the first feed spacer is connected with the first folded edge, and an other end of the first feed spacer extends to a position opposite to the end of the first long leaf. The first feed spacer extends from the first raw water channel to the third raw water channel. A second feed spacer is further disposed in the second raw water channel. One end of the second feed spacer is connected with the second folded edge, and an other end of the second feed spacer extends to a position opposite to the end of the second short leaf. The second feed spacer extends in the second raw water channel.

In some embodiments, in a projective plane of an axial end surface of the central tube, a length of the first feed spacer is not less than a length of the first long leaf, and a length of the second feed spacer is greater than a length of the second short leaf.

In some embodiments, a first feed spacer is further disposed in the first raw water channel. One end of the first feed spacer is connected with the first folded edge, and an other end of the first feed spacer extends to a position opposite to the end of the first short leaf. The first feed spacer extends in the first raw water channel. A second feed spacer is further disposed in the second raw water channel and the third raw water channel. One end of the second feed spacer is connected with the second folded edge, and an other end of the second feed spacer extends to a position opposite to the end of the second long leaf. The second feed spacer extends from the second raw water channel to the third raw water channel.

In some embodiments, in a projective plane of an axial end surface of the central tube, a length of the first feed spacer is greater than a length of the first short leaf, and a length of the second feed spacer is not less than a length of the second long leaf.

In some embodiments, a surface of the first long leaf opposite to the first short leaf is a front surface of the first long leaf. A surface of the first short leaf opposite to the first long leaf is a front surface of the first short leaf. The first raw water channel is formed between the front surface of the first long leaf and the front surface of the first short leaf.

A surface of the second long leaf opposite to the second short leaf is a front surface of the second long leaf. A surface of the second short leaf opposite to the second long leaf is a front surface of the second short leaf. The second raw water channel is formed between the front surface of the second long leaf and the front surface of the second short leaf.

The third raw water channel is formed between a front surface of the part of the first long leaf extending beyond the first short leaf and a front surface of the part of the second long leaf extending beyond the second short leaf that are disposed oppositely.

In some embodiments, a first pure water channel is formed between a back surface of the first short leaf and a back surface of the second short leaf. The back surface of the first short leaf is one side surface facing away from the first long leaf. Pure water obtained by filtering and purifying raw water in the first raw water channel through the first short leaf enters the first pure water channel. Pure water obtained by filtering and purifying raw water in the second raw water channel through the second short leaf enters the first pure water channel.

After the first reverse osmosis membrane sheet and the second reverse osmosis membrane sheet are stacked into a whole and wound around the central tube, a second pure water channel is formed between a back surface of the first long leaf and a back surface of the second long leaf. Pure water obtained by filtering and purifying the raw water in the first raw water channel through the first long leaf enters the second pure water channel. Pure water obtained by filtering and purifying the raw water in the second raw water channel through the second long leaf enters the second pure water channel. Pure water obtained by filtering and purifying raw water in the third raw water channel through the first long leaf and the second long leaf enters the second pure water channel.

In some embodiments, a first pure water guiding cloth is further disposed in the first pure water channel. A second pure water guiding cloth is further disposed in the second pure water channel.

In the projective plane of the axial end surface of the central tube, a length of the first pure water guiding cloth is greater than the length of the first short leaf, and the length of the first short leaf is equal to the length of the second short leaf. A length of the second pure water guiding cloth is greater than the length of the first long leaf, and the length of the first long leaf is equal to the length of the second long leaf.

In some embodiments, a first sealing member is connected between the back surface of the first short leaf and the back surface of the second short leaf. A pure water outlet of the first pure water channel is oriented towards the first folded edge. A second sealing member is connected between the back surface of the first long leaf and the back surface of the second long leaf. A pure water outlet of the second pure water channel is oriented towards the first folded edge.

In some embodiments, in the projective plane of the axial end surface of the central tube, the length of the first short leaf is equal to the length of the second short leaf; and the length of the first long leaf is equal to the length of the second long leaf.

In some embodiments, an end after the first folded edge and the second folded edge are stacked is an initial end wound around an outer peripheral wall of the central tube. An open end formed between the end of the first long leaf and the end of the second long leaf is a tail end wound around the central tube. The initial end is connected with the outer peripheral wall of the central tube. The tail end is located radially outside the initial end. The first pure water channel and the second pure water channel are in communication with an interior of the central tube. Filtered and purified pure water is discharged from the interior of the central tube. Filtered and purified concentrated water flows out of the open end formed between the end of the first long leaf and the end of the second long leaf.

In some embodiments, an open end formed between the end of the first long leaf and the end of the second long leaf is stacked as an initial end wound around an outer peripheral wall of the central tube. An end after the first folded edge and the second folded edge are stacked is a tail end wound around the central tube. The initial end is connected with the outer peripheral wall of the central tube. The tail end is located radially outside the initial end. An open end between the end of the first long leaf and the end of the second long leaf is in communication with an interior of the central tube. Filtered and purified concentrated water flows into the interior of the central tube through the open end between the end of the first long leaf and the end of the second long leaf. The first pure water channel and the second pure water channel are separately in communication with an exterior of the spiral wound reverse osmosis membrane element. Filtered and purified pure water is discharged out of the first pure water channel and the second pure water channel separately.

In some embodiments, the first reverse osmosis membrane sheet and the second reverse osmosis membrane sheet form a reverse osmosis unit, and at least two reverse osmosis units are provided. The at least two reverse osmosis units are stacked and integrally wound around the central tube.

The invention further provides a water purifier. The water purifier includes the spiral wound reverse osmosis membrane element according to any one of the above embodiments.

The spiral wound reverse osmosis membrane element and the water purifier with the spiral wound reverse osmosis membrane element according to the invention have the following beneficial effects:
According to the invention, the first reverse osmosis membrane sheet is folded to form the first long leaf and the first short leaf having different lengths, the second reverse osmosis membrane sheet is folded to form the second long leaf and the second short leaf having different lengths, and the two short leaves are disposed oppositely. The first raw water channel is formed between opposite surfaces of the first long leaf and the first short leaf, the second raw water channel is formed between opposite surfaces of the second long leaf and short leaf, and the third raw water channel is formed between directly opposite surfaces of the part of the first long leaf extending beyond the first short leaf and the part of the second long leaf extending beyond the second short leaf. Flowing directions of water are from the first to third raw water channel and from the second to third raw water channel, such that the two original raw water channels are merged into the third raw water channel in the flowing directions. In this way, a cross-sectional circulation area of fluid can be effectively reduced, a flow velocity of the fluid can be further increased, concentration polarization at a concentrated water side can be slowed down, anti-pollution performance of a reverse osmosis membrane can be improved, and service life of a filter element of the reverse osmosis membrane can be prolonged. That is, the invention effectively reduces a size of a water inlet channel at the concentrated water side by folding the long and short leaves and winding the membrane, such that a flow velocity on a membrane surface at the concentrated water side can be effectively improved, the concentration polarization at the concentrated water side can be slowed down, the anti-pollution performance of the reverse osmosis membrane can be enhanced, and the service life of the filter element of the reverse osmosis membrane can be prolonged.

### Brief Description of the Drawings

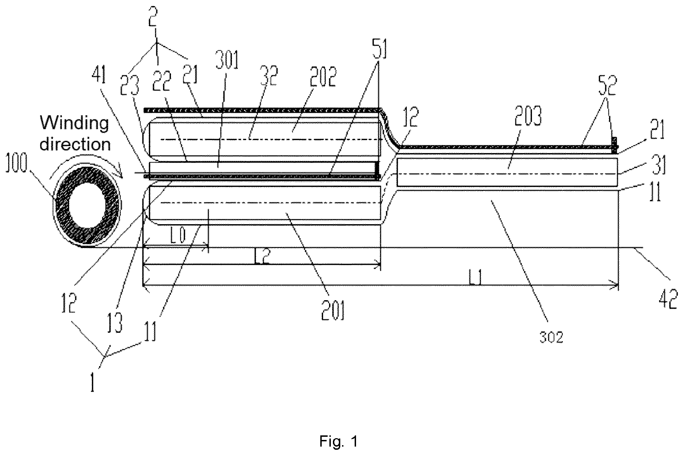

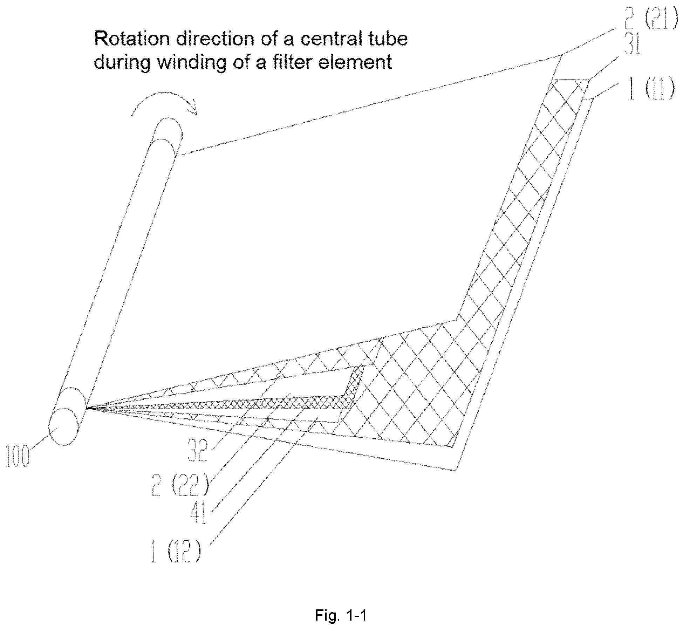

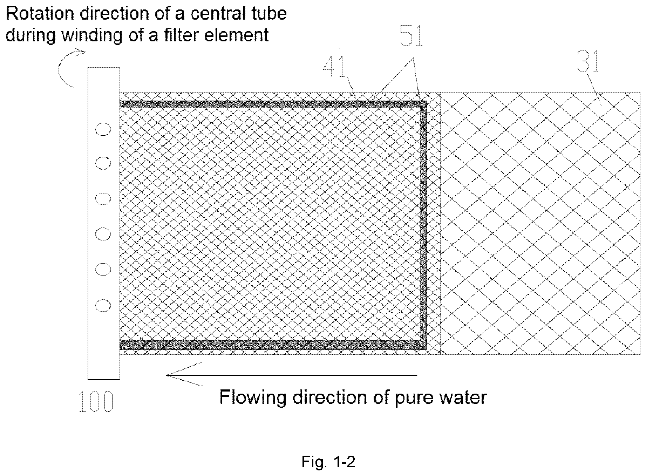

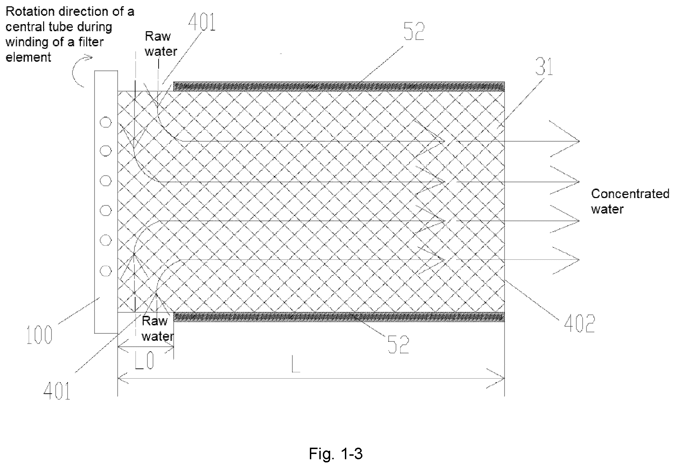

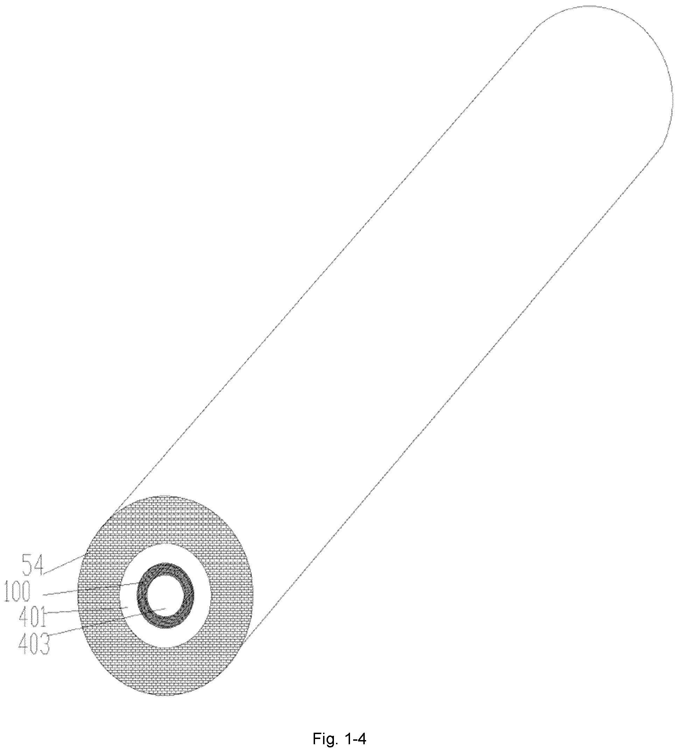

Fig. 1 illustrates a schematic structural diagram of Example 1 of a spiral wound reverse osmosis membrane element of the invention (a view in a projective plane of an axial end surface of a central tube, that is, a view in a cross section of the central tube);
Fig. 1-1 illustrates a schematic diagram of a winding process of the spiral wound reverse osmosis membrane element of Fig. 1;
Fig. 1-2 illustrates a schematic diagram of a pure water channel of the spiral wound reverse osmosis membrane element of Fig. 1;
Fig. 1-3 illustrates a schematic diagram of a concentrated water channel of the spiral wound reverse osmosis membrane element of Fig. 1;
Fig. 1-4 illustrates a schematic structural diagram of the spiral wound reverse osmosis membrane element of Fig. 1 after winding is completed;
Fig. 2 illustrates a schematic structural diagram of Example 2 of a spiral wound reverse osmosis membrane element of the invention (a view in a projective plane of an axial end surface of a central tube);
Fig. 3 illustrates a schematic structural diagram of Example 3 of a spiral wound reverse osmosis membrane element of the invention (a view in a projective plane of an axial end surface of a central tube);
Fig. 4 illustrates a schematic structural diagram of Example 4 of a spiral wound reverse osmosis membrane element of the invention (a view in a projective plane of an axial end surface of a central tube); and
Fig. 5 illustrates a schematic structural diagram of Example 5 of a spiral wound reverse osmosis membrane element of the invention (a view in a projective plane of an axial end surface of a central tube).

### Reference numerals are expressed as follows:

100, central tube; 1, first reverse osmosis membrane sheet; 11, first long leaf; 12, first short leaf; 13, first folded edge; 2, second reverse osmosis membrane sheet; 21, second long leaf; 22, second short leaf; 23, second folded edge; 31, first feed spacer; 32, second feed spacer; 41, first pure water guiding cloth; 42, second pure water guiding cloth; 51, first sealing member; 52, second sealing member; 201, first raw water channel; 202, second raw water channel; 203, third raw water channel; 301, first pure water channel; 302, second pure water channel; 401, water inlet; 402, concentrated water outlet; and 403, pure water outlet.

### Detailed Description of the Embodiments

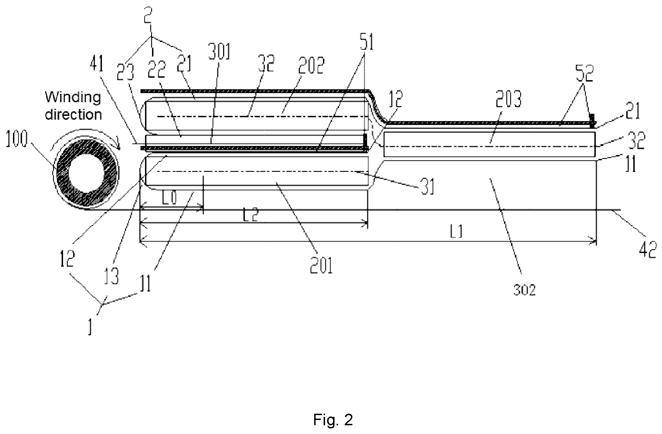

As shown in Fig. 1 to Fig. 5, the invention provides a spiral wound reverse osmosis membrane element. The spiral wound reverse osmosis membrane element includes:
a central tube 100, a first reverse osmosis membrane sheet 1, and a second reverse osmosis membrane sheet 2. The first reverse osmosis membrane sheet 1 is bent to form a first long leaf 11, a first folded edge 13 and a first short leaf 12 that are sequentially connected. A length of the first long leaf 11 is greater than a length of the first short leaf 12. The second reverse osmosis membrane sheet 2 is bent to form a second long leaf 21, a second folded edge 23 and a second short leaf 22 that are sequentially connected. A length of the second long leaf 21 is greater than a length of the second short leaf 22. The first short leaf 12 and the second short leaf 22 are disposed oppositely. The first reverse osmosis membrane sheet 1 and the second reverse osmosis membrane sheet 2 are stacked into a whole and then wound around the central tube 100.

A first raw water channel 201 is formed between a part of the first long leaf 11 and the first short leaf 12 that are disposed oppositely. A second raw water channel 202 is formed between a part of the second long leaf 21 and the second short leaf 22 that are disposed oppositely. A third raw water channel 203 is formed between a part of the first long leaf 11 extending beyond the first short leaf 12 and a part of the second long leaf 21 extending beyond the second short leaf 22 that are disposed oppositely. The first raw water channel 201 and the second raw water channel 202 are in communication with a raw water nozzle so as to feed raw water. Water in the first raw water channel 201 and water in the second raw water channel 202 separately flow to the third raw water channel 203. A sum of cross-sectional circulation areas of the first raw water channel 201 and the second raw water channel 202 is greater than a cross-sectional circulation area of the third raw water channel 203. The cross-sectional circulation area refers to an area of a cross section perpendicular to a flowing direction of fluid. The first and second reverse osmosis membrane sheets of the invention are two independent reverse osmosis membrane sheets, and are formed by splicing different structures of long and short leaves.

According to the invention, the first reverse osmosis membrane sheet is folded to form the first long leaf and the first short leaf having different lengths, the second reverse osmosis membrane sheet is folded to form the second long leaf and the second short leaf having different lengths, and the two short leaves are disposed oppositely. The first raw water channel is formed between opposite surfaces of the first long leaf and the first short leaf, the second raw water channel is formed between opposite surfaces of the second long leaf and short leaf, and the third raw water channel is formed between directly opposite surfaces of the part of the first long leafextending beyond the first short leaf and the part of the second long leaf extending beyond the second short leaf. Flowing directions of water are from the first to third raw water channel and from the second to third raw water channel, such that the two original raw water channels are merged into the third raw water channel in the flowing directions. In this way, a cross-sectional circulation area of water flows can be effectively reduced, a flow velocity of fluid can be further increased, concentration polarization at a concentrated water side can be slowed down, anti-pollution performance of a reverse osmosis membrane can be improved, and service life of a filter element of the reverse osmosis membrane can be prolonged. That is, the invention effectively reduces a size of a water inlet channel at the concentrated water side by folding the long and short leaves and winding the membrane, such that a flow velocity on a membrane surface at the concentrated water side can be effectively improved, the concentration polarization at the concentrated water side can be slowed down, the anti-pollution performance of the reverse osmosis membrane can be enhanced, and the service life of the filter element of the reverse osmosis membrane can be prolonged.

The spiral wound reverse osmosis membrane element of the invention includes the central tube, and the first reverse osmosis membrane sheet, the second reverse osmosis membrane sheet, a first inlet screen, a second inlet screen and a first pure water guiding cloth that are wound around the central tube. Front surfaces of the first reverse osmosis membrane sheet and the second reverse osmosis membrane sheet are folded to form folded edges as well as long leaves and short leaves separated by the folded edges. The first raw water channel is formed between the first long leaf and the first short leaf of the first reverse osmosis membrane sheet, the second raw water channel is formed between the second long leaf and the second short leaf of the second reverse osmosis membrane sheet, and the third raw water channel is formed between front surfaces of the first long leaf of the first reverse osmosis membrane sheet and the second long leaf of the second reverse osmosis membrane sheet. The first inlet screen is inserted into the first raw water channel and the third raw water channel, and the second inlet screen is inserted into the second raw water channel. Or, the first inlet screen is inserted into the second raw water channel and the third raw water channel, and the second inlet screen is inserted into the first raw water channel. A main function of the inlet screens is to form a water gap and a water passage between front surfaces of reverse osmosis membrane sheets, such that raw water flows smoothly on surfaces of the reverse osmosis membrane sheets. A size of a water inlet channel at a concentrated water side is reduced by folding the long and short leaves and winding the membrane, such that a flow velocity on a membrane surface at the concentrated water side can be improved, concentration polarization at the concentrated water side can be further slowed down, anti-pollution performance of the reverse osmosis membrane can be enhanced, and service life of a filter element of the reverse osmosis membrane can be prolonged.

In some embodiments, in a projective plane of an axial end surface of the central tube 100 (that is, in a cross section of the central tube, and for instance, a plane shown in Fig. 1), the first short leaf 12 and the second short leaf 22 have an equal length of L2, and the first long leaf 11 and the second long leaf 21 have an equal length of L1, L1>L2; and 1/3≤L2/L1≤3/4.

An end of the first short leaf 12 and an end of the second short leaf 22 are disposed oppositely. The first folded edge 13 and the second folded edge 23 are disposed oppositely. An end of the first long leaf 11 and an end of the second long leaf 21 are disposed oppositely.

A preferred positional relation and a preferred dimensional relation of the first long leaf, the first short leaf, the second long leaf and the second short leaf in the invention are shown. That is, the first and second long leaves have an equal length, the first short leaf and the second short leaf have an equal length, and the lengths of the two long leaves are longer than those of the two short leaves. Filtering is conducted separately in the raw water channels corresponding to the two long leaves and the two short leaves, and the two channels is effectively merged when water enters the raw water channel between the two long leaves longer than the two short leaves. The cross-sectional circulation area can be effectively reduced, the flow velocity of the fluid can be further increased, the concentration polarization at the concentrated water side can be effectively reduced, fouling can be prevented, and the anti-pollution performance of the reverse osmosis membrane can be enhanced.

In some embodiments, a ratio of a length of a side of the first short leaf perpendicular to the folded edge (that is, the length L2 of the first short leaf) to a length of a side of the first long leaf perpendicular to the folded edge (that is, the length L1 of the first long leaf) is 1:3-3:4. That is, 1/3≤L2/L1≤3/4. If L2 is too short, pressure loss of the channel is increased, a flow utilization rate of the filter element is reduced, and performance of the filter element may be reduced. If L2 is too long, an effect of improving the flow velocity is limited and the effect is not obvious.

In some embodiments, a size of the first reverse osmosis membrane sheet is identical to the size of the second reverse osmosis membrane sheet.

In some embodiments, axial ends of the first raw water channel 201 and the second raw water channel 202 are provided with water inlets 401 (that is, raw water inlets), and a length of the water inlets 401 in the projective plane of the axial end surface of the central tube 100 is L0. L0<L2. There is a further preferred structural form of the invention. That is, the length of the water inlets is less than the length of the short leaves. The raw water inlets are used for allowing raw water to enter a channel between front surfaces of reverse osmosis membrane sheets. The length needs to be appropriate. Too small a length leads to excessive resistance and unsmooth water inflow. Too great a length leads to change in a direction of the channels and influence on design performance. In some embodiments, 1/10≤L0/L2≤1/2.

In Example 1, in some embodiments, a first feed spacer 31 is further disposed in the first raw water channel 201 and the third raw water channel 203. One end of the first feed spacer 31 is connected with the first folded edge 13, and an other end of the first feed spacer extends to a position opposite to an end of the first long leaf 11. The first feed spacer 31 extends from the first raw water channel 201 to the third raw water channel 203. A second feed spacer 32 is further disposed in the second raw water channel 202. One end of the second feed spacer 32 is connected with the second folded edge 23, and an other end of the second feed spacer extends to a position opposite to an end of the second short leaf 22. The second feed spacer 32 extends in the second raw water channel 202.

A preferred structural form of the first and second feed spacers in Example 1 of the invention is shown. That is, the first feed spacer extends from the first raw water channel to the third raw water channel. Meanwhile, the raw water channel between the first short leaf and the first long leaf is supported, the third raw water channel between the first and second long leaves is supported, and the second feed spacer is only used to effectively support the second raw water channel between the second long leaf and the second short leaf.

In some embodiments, in the projective plane of the axial end surface of the central tube 100, a length of the first feed spacer 31 is not less than the length of the first long leaf 11, and a length of the second feed spacer 32 is greater than the length of the second short leaf 22. The length of the first feed spacer in Example 1 of the invention is not less than the length of the first long leaf, such that the first feed spacer extends from the first raw water channel to the third raw water channel, and an entire length section of the first long leaf is supported. The length of the second feed spacer is greater than the length of the second short leaf, such that an entire length section of the second short leaf is effectively supported.

In some embodiments, the length of the first inlet screen is 1 mm-10 mm greater than the length of the side of the first long leaf perpendicular to the folded edge (that is, the length L1 of the first long leaf). A length of a inlet screen is slightly greater than a length of a membrane sheet, such that surfaces of all membrane sheets are ensured to be provided with inlet screens, the surfaces of all the membrane sheets can be fully used for filtration, and the situation that direct contact between surfaces of the membrane sheets leads to passing failure of fluid can be avoided.

In Examples 1 and 2, the spiral wound reverse osmosis membrane element of the invention includes the central tube, and the first reverse osmosis membrane sheet, the second reverse osmosis membrane sheet, the first inlet screen, the second inlet screen and the first pure water guiding cloth that are wound around the central tube. The front surfaces of the first reverse osmosis membrane sheet and the second reverse osmosis membrane sheet are folded to form folded edges as well as two long leaves and two short leaves separated by the folded edges. The first raw water channel is formed between the first long leaf and the first short leaf of the first reverse osmosis membrane sheet, the second raw water channel is formed between the second long leaf and the second short leaf of the second reverse osmosis membrane sheet, and the third raw water channel is formed between the front surfaces of the first long leaf of the first reverse osmosis membrane sheet and the second long leaf of the second reverse osmosis membrane sheet. The first inlet screen is inserted into the first raw water channel and the third raw water channel, and the second inlet screen is inserted into the second raw water channel (Example 1). Or, the first inlet screen is inserted into the second raw water channel and the third raw water channel, and the second inlet screen is inserted into the first raw water channel (Example 2).

In some embodiments, a back surface of the short leaf of the first reverse osmosis membrane sheet and a back surface of the short leaf of the second reverse osmosis membrane sheet are partially sealed to form a pure water channel whose end closer to the folded edge is provided with a pure water outlet, and the first pure water guiding cloth is disposed between the back surface of the short leaf of the first reverse osmosis membrane sheet and the back surface of the short leaf of the second reverse osmosis membrane sheet.

In Example 2, in some embodiments, a first feed spacer 31 is further disposed in the first raw water channel 201. One end of the first feed spacer 31 is connected with the first folded edge 13, and an other end of the first feed spacer extends to a position opposite to the end of the first short leaf 12. The first feed spacer 31 extends in the first raw water channel 201. A second feed spacer 32 is further disposed in the second raw water channel 202 and the third raw water channel 203. One end of the second feed spacer 32 is connected with the second folded edge 23, and an other end of the second feed spacer extends to a position opposite to the end of the second long leaf 21. The second feed spacer 32 extends from the second raw water channel 202 to the third raw water channel 203.

A preferred structural form of the first and second feed spacers in Example 2 of the invention is shown. That is, the second feed spacer extends from the second raw water channel to the third raw water channel. Meanwhile, the raw water channel between the second short leaf and the second long leaf is supported, the third raw water channel between the first and second long leaves is supported, and the first feed spacer is only used to effectively support the first raw water channel between the first long leaf and the first short leaf.

In some embodiments, in the projective plane of the axial end surface of the central tube 100, a length of the first feed spacer 31 is greater than the length of the first short leaf 12, and a length of the second feed spacer 32 is greater than the length of the second long leaf 21. The length of the second feed spacer in Example 2 of the invention is not less than the length of the second long leaf, such that the second feed spacer extends from the first raw water channel to the third raw water channel, and an entire length section of the second long leaf is supported. The length of the first feed spacer is greater than the length of the first short leaf, such that an entire length section of the first short leaf is effectively supported.

In some embodiments, a surface of the first long leaf 11 opposite to the first short leaf 12 is a front surface of the first long leaf 11. A surface of the first short leaf 12 opposite to the first long leaf 11 is a front surface of the first short leaf 12. The first raw water channel 201 is formed between the front surface of the first long leaf 11 and the front surface of the first short leaf 12.

A surface of the second long leaf 21 opposite to the second short leaf 22 is a front surface of the second long leaf 21. A surface of the second short leaf 22 opposite to the second long leaf 21 is a front surface of the second short leaf 22. The second raw water channel 202 is formed between the front surface of the second long leaf 21 and the front surface of the second short leaf 22.

The third raw water channel 203 is formed between a front surface of the part of the first long leaf 11 extending beyond the first short leaf 12 and a front surface of the part of the second long leaf 21 extending beyond the second short leaf 22 that are disposed oppositely.

There are a positional relation and a formation mode of the first long leaf, the first short leaf, the second long leaf, the second short leaf, and the first, second and third raw water channels in the invention. That is, opposite surfaces of two leaves are front faces, and surfaces facing away from each other of two leaves are back surfaces. The first raw water channel is formed between the front surfaces of the first long leaf and the first short leaf, the second raw water channel is formed between the front surfaces of the second long leaf and the second short leaf, and the third raw water channel is formed in a space where the front surfaces of the first long leaf and the second long leaf are opposite to each other. Two channels are merged into one channel in flowing directions, such that a cross-sectional circulation area can be reduced, a flow velocity can be increased, concentration polarization can be further reduced, and fouling and pollution can be reduced.

In some embodiments, a first pure water channel 301 is formed between a back surface of the first short leaf 12 and a back surface of the second short leaf 22. The back surface of the first short leaf 12 is one side surface facing away from the first long leaf 11. The back surface of the first short leaf 12 is one side surface facing away from the first long leaf 11. Pure water obtained by filtering and purifying raw water in the first raw water channel 201 through the first short leaf 12 enters the first pure water channel 301. Pure water obtained by filtering and purifying raw water in the second raw water channel 202 through the second short leaf 22 enters the first pure water channel 301.

After the first reverse osmosis membrane sheet 1 and the second reverse osmosis membrane sheet 2 are stacked into a whole and wound around the central tube 100, a second pure water channel 302 is formed between a back surface of the first long leaf 11 and a back surface of the second long leaf 21. Pure water obtained by filtering and purifying the raw water in the first raw water channel 201 through the first long leaf 11 enters the second pure water channel 302. Pure water obtained by filtering and purifying the raw water in the second raw water channel 202 through the second long leaf 21 enters the second pure water channel 302. Pure water obtained by filtering and purifying raw water in the third raw water channel 203 through the first long leaf 11 and the second long leaf 21 enters the second pure water channel 302.

There is a formation mode of the first pure water channel and the second pure water channel of the invention. That is, the first pure water channel is formed between the back surfaces of the first short leaf and the second short leaf. Water in the respective raw water channels is filtered and purified through the two short leaves, such that pure water purified through the short leaves enters the first pure water channel. The second pure water channel is formed between the back surfaces of the first long leaf and the second long leaf. Water in the first and second raw water channels is filtered and purified through the two long leaves, and water in the third raw water channel is filtered and purified through the two long leaves, such that formed pure water enters the second pure water channel and finally is discharged out in different manners.

In some embodiments, a first pure water guiding cloth 41 is further disposed in the first pure water channel 301, and a second pure water guiding cloth 42 is further disposed in the second pure water channel 302.

In the projective plane of the axial end surface of the central tube 100, a length of the first pure water guiding cloth 41 is greater than the length of the first short leaf 12, and the length of the first short leaf 12 is equal to the length of the second short leaf 22. A length of the second pure water guiding cloth 42 is greater than the length of the first long leaf 11, and the length of the first long leaf 11 is equal to the length of the second long leaf 21.

According to the invention, space and guiding are provided for flowing of pure water through the first pure water guiding cloth disposed in the first pure water channel, and space and guiding are provided for flowing of pure water through the second pure water guiding cloth disposed in the second pure water channel. In addition, a length of a pure water guiding cloth is slightly greater than a length of a membrane sheet, such that water produced on back surfaces of all reverse osmosis membrane sheets can be ensured to be smoothly guided out, and the situation that the pure water fails to flow out effectively due to direct contact between the back surfaces of the reverse osmosis membrane sheets can be avoided.

A main function of the pure water guiding cloth is to form a water gap and a water-producing channel between the back surfaces of the reverse osmosis membrane sheets. Raw water at a raw water side of the reverse osmosis membrane sheets permeates through the reverse osmosis membrane sheets under pressure to reach the back surfaces of the reverse osmosis membrane sheets, and produced water flows out of the pure water channel formed by the pure water guiding cloth. Thus, a length of a pure water guiding cloth is slightly greater than the length of a membrane sheet, such that water produced on back surfaces of all reverse osmosis membrane sheets can be ensured to be smoothly guided out, and the situation that the pure water fails to flow out effectively due to direct contact between the back surfaces of the reverse osmosis membrane sheets can be avoided.

In some embodiments, the length of the first pure water guiding cloth is 1 mm-10 mm greater than the length of the side of the first short leaf perpendicular to the folded edge (that is, the first short leaf 12).

In some embodiments, a first sealing member 51 (a U-shaped structure as shown in Fig. 1-2) is connected between the back surface of the first short leaf 12 and the back surface of the second short leaf 22. A pure water outlet of the first pure water channel 301 is oriented towards the first folded edge 13. A second sealing member 52 is connected between the back surface of the first long leaf 11 and the back surface of the second long leaf 21. A pure water outlet of the second pure water channel 302 is oriented towards the first folded edge 13.

There is a structural form of several sealing members having different structures in two pure water channels of the invention. The first sealing member can effectively prevent water in the first pure water channel from being mixed with raw water in the raw water channel and an exterior. The second sealing member can effectively prevent water in the second pure water channel from being mixed with raw water in the raw water channel and an exterior. It can be ensure that filtered pure water is not mixed with the raw water, and a purification effect can be improved.

Examples 1 and 3, in some embodiments, an end after the first folded edge 13 and the second folded edge 23 are stacked is an initial end wound around an outer peripheral wall of the central tube 100. An open end formed between the end of the first long leaf 11 and the end of the second long leaf 21 is a tail end wound around the central tube 100. The initial end is connected with the outer peripheral wall of the central tube 100. The tail end is located radially outside the initial end. The first pure water channel 301 and the second pure water channel 302 are in communication with an interior of the central tube 100. Filtered and purified pure water is discharged from the interior of the central tube 100. Filtered and purified concentrated water flows out of the open end formed between the end of the first long leaf 11 and the end of the second long leaf 21.

Through the structural form of the invention, the folded edge is connected with the central tube and wound. The open end is located at an outer side in a radial direction of winding. Water enters the first and second raw water channels through a raw water inlet, and enters the first and second pure water channels after filtered and purified through the reverse osmosis membrane sheets. The first and second pure water channels are in communication with the interior of the central tube. The water flows into the interior of the central tube, such that the pure water is exported and transported, and the concentrated water flows to the open end formed by the ends of the first and second long leaves and is discharged. A flow velocity of the raw water can be improved (especially at a position where the channels are merged) while normal filtration and purification can be effectively implemented, and a flow velocity in the third raw water channel can be increased. Thus, concentration polarization in the third raw water channel can be reduced, and an anti-fouling ability can be improved.

In some embodiments, a short side of the first pure water guiding cloth closer to the pure water outlet is connected with the central tube, and then the reverse osmosis membrane sheets, the inlet screens and the pure water guiding cloths that are bonded are wound around the central tube, such that the pure water outlet of the pure water channels after winding faces the central tube.

In some embodiments, glue is applied to end surfaces of the reverse osmosis membrane sheets and the inlet screens after winding so as to partially seal the raw water channels, and a glue application position is farther from the central tube, such that the raw water inlets (the water inlets 401) are formed at positions of the end surfaces closer to the central tube.

In some embodiments, a length of the raw water inlets is 1/10-1/2 of a length of a side of the first short leaf adjacent to the folded edge. The raw water inlets are used for allowing raw water to enter a channel between the front surfaces of the reverse osmosis membrane sheets. The length needs to be appropriate. Too small a length leads to excessive resistance and unsmooth water inflow. Too great a length leads to change in a direction of the channels and influence on design performance.

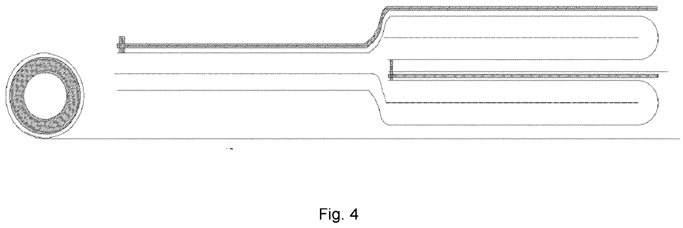

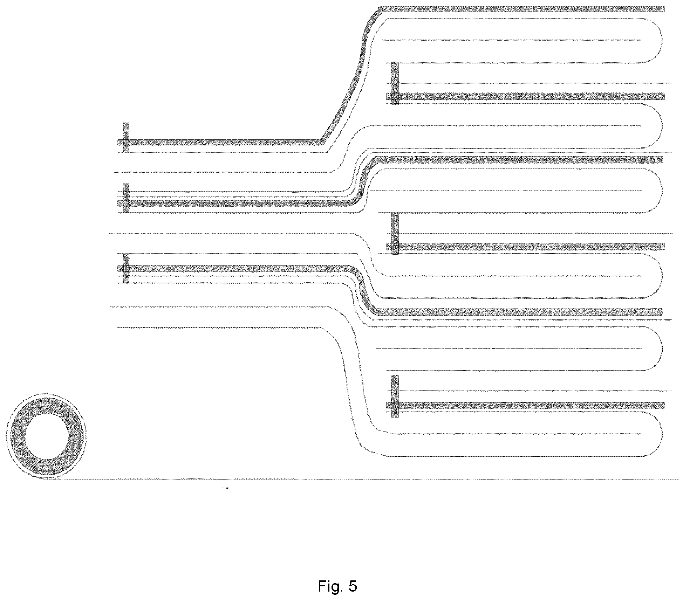

Examples 4 and 5, as shown in Fig. 4 and Fig. 5, in some embodiments, an open end formed between the end of the first long leaf 11 and the end of the second long leaf 21 is stacked as an initial end wound around an outer peripheral wall of the central tube 100. An end after the first folded edge 13 and the second folded edge 23 are stacked is a tail end wound around the central tube 100. The initial end is connected with the outer peripheral wall of the central tube 100. The tail end is located radially outside the initial end. An opening between the end of the first long leaf 11 and the end of the second long leaf 21 is in communication with an interior of the central tube 100. Filtered and purified concentrated water flows into the interior of the central tube 100 through the open end between the end of the first long leaf 11 and the end of the second long leaf 21. The first pure water channel 301 and the second pure water channel 302 are separately in communication with an exterior of the spiral wound reverse osmosis membrane element. Filtered and purified pure water is discharged out of the first pure water channel 301 and the second pure water channel 302 separately.

Through the structural form of the invention, the open end is connected with the central tube and wound. The folded edge is located at an outer side in a radial direction of winding. Water enters the first and second raw water channels through a raw water inlet, enters the first and second pure water channels after filtered and purified through the reverse osmosis membrane sheets, and is discharged to the outer side in the radial direction. The pure water is exported and transported, and the concentrated water flows to the open end formed by the ends of the first and second long leaves and is discharged into the central tube. A flow velocity of the raw water can be improved (especially at a position where the channels are merged) while normal filtration and purification can be effectively implemented, and a flow velocity in the third raw water channel can be increased. Thus, concentration polarization in the third raw water channel can be reduced, and an anti-fouling ability can be improved.

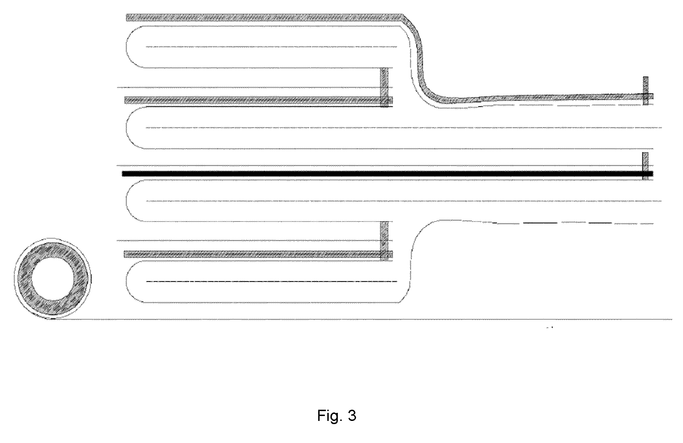

Examples 3 and 5, as shown in Fig. 3 and Fig. 5, in some embodiments, the first reverse osmosis membrane sheet 1 and the second reverse osmosis membrane sheet 2 form a reverse osmosis unit, and at least two reverse osmosis units are provided. The at least two reverse osmosis units are stacked and integrally wound around the central tube 100.

### Example 3:

As shown in Fig. 3, a spiral wound reverse osmosis membrane element includes a central tube, and a first reverse osmosis membrane sheet, a second reverse osmosis membrane sheet, a third reverse osmosis membrane sheet, a fourth reverse osmosis membrane sheet, a first inlet screen, a second inlet screen, a first pure water guiding cloth and a second pure water guiding cloth that are wound around the central tube.

Front surfaces of the first reverse osmosis membrane sheet and the second reverse osmosis membrane sheet are folded to form folded edges as well as two long leaves and two short leaves separated by the folded edges. A first raw water channel is formed between a first long leaf and a first short leaf of the first reverse osmosis membrane sheet, a second raw water channel is formed between a second long leaf and a second short leaf of the second reverse osmosis membrane sheet, and a third raw water channel is formed between front surfaces of the first long leaf of the first reverse osmosis membrane sheet and the second long leaf of the second reverse osmosis membrane sheet. The first inlet screen is inserted into the first raw water channel and the third raw water channel, and the second inlet screen is inserted into the second raw water channel.

Front surfaces of the third reverse osmosis membrane sheet and the fourth reverse osmosis membrane sheet are folded to form folded edges as well as two long leaves and two short leaves separated by the folded edges. A fourth raw water channel is formed between a third long leaf and a third short leaf of the third reverse osmosis membrane sheet, a fifth raw water channel is formed between a fourth long leaf and a fourth short leaf of the fourth reverse osmosis membrane sheet, and a sixth raw water channel is formed between front surfaces of the third long leaf of the third reverse osmosis membrane sheet and the fourth long leaf of the fourth reverse osmosis membrane sheet. A third inlet screen is inserted into the fourth raw water channel and the sixth raw water channel, and a fourth inlet screen is inserted into the fifth raw water channel.

A back surface of the short leaf of the first reverse osmosis membrane sheet and a back surface of the short leaf of the second reverse osmosis membrane sheet are partially sealed to form a pure water channel whose end closer to the folded edges is provided with a pure water outlet, and the first pure water guiding cloth is disposed between the back surface of the short leaf of the first reverse osmosis membrane sheet and the back surface of the short leaf of the second reverse osmosis membrane sheet.

A back surface of the second long leaf of the second reverse osmosis membrane sheet and a back surface of the third long leaf of the third reverse osmosis membrane sheet are partially sealed to form a pure water channel whose end closer to the folded edges is provided with a pure water outlet, and the second pure water guiding cloth is disposed between the back surface of the second long leaf of the second reverse osmosis membrane sheet and the back surface of the third long leaf of the third reverse osmosis membrane sheet.

A back surface of the short leaf of the third reverse osmosis membrane sheet and a back surface of the short leaf of the fourth reverse osmosis membrane sheet are partially sealed to form a pure water channel whose end closer to the folded edges is provided with a pure water outlet, and a third pure water guiding cloth is disposed between the back surface of the short leaf of the third reverse osmosis membrane sheet and the back surface of the short leaf of the fourth reverse osmosis membrane sheet.

In some embodiments, lengths of the plurality of long leaves are all equal, and lengths of the plurality of short leaves are all equal.

In some embodiments, a ratio of a length of a side of each of the short leaves perpendicular to the folded edge to a length of a side of each of the long leaves perpendicular to the folded edge is 1:3-3:4.

In some embodiments, a length of the first inlet screen is 1 mm-10 mm greater than the length of the side of each of the long leaves perpendicular to the folded edge.

In some embodiments, a length of the second inlet screen is 5 mm-10 mm greater than the length of the side of each of the short leaves perpendicular to the folded edge.

In some embodiments, a length of the first pure water guiding cloth is 1 mm-10 mm greater than the length of the side of each of the short leaves perpendicular to the folded edge.

In some embodiments, a length of the second pure water guiding cloth is 1 mm-10 mm greater than the length of the side of each of the long leaves perpendicular to the folded edge.

In some embodiments, sizes of the reverse osmosis membrane sheets are identical.

In some embodiments, short sides of the first pure water guiding cloth and the second pure water guiding cloth closer to the pure water outlet are connected with the central tube, and then the reverse osmosis membrane sheets, the inlet screens and the pure water guiding cloths that are bonded are wound around the central tube, such that the pure water outlet of the pure water channels after winding faces the central tube.

In some embodiments, glue is applied to end surfaces of the reverse osmosis membrane sheets and the inlet screens after winding so as to partially seal the raw water channels, and a glue application position is farther from the central tube, such that the raw water inlets are formed at positions of the end surfaces closer to the central tube.

In some embodiments, a length of the raw water inlets is 1/10-1/3 of a length of a side of the first long leaf adjacent to the folded edge.

According to the invention, a sectional area of a water inlet channel at a concentrated water side is reduced by folding the long and short leaves and winding the membrane, such that a flow velocity on a membrane surface at the concentrated water side can be improved, concentration polarization at the concentrated water side can be further slowed down, anti-pollution performance of the reverse osmosis membrane can be enhanced, and service life of a filter element of the reverse osmosis membrane can be prolonged.

The invention further includes a water purifier having the reverse osmosis membrane element.

### Example 4:

As shown in Fig. 4, a spiral wound reverse osmosis membrane element includes a central tube, and a first reverse osmosis membrane sheet, a second reverse osmosis membrane sheet, a first inlet screen, a second inlet screen and a first pure water guiding cloth that are wound around the central tube. Front surfaces of the first reverse osmosis membrane sheet and the second reverse osmosis membrane sheet are folded to form folded edges as well as two long leaves and two short leaves separated by the folded edges. A first raw water channel is formed between a first long leaf and a first short leaf of the first reverse osmosis membrane sheet, a second raw water channel is formed between a second long leaf and a second short leaf of the second reverse osmosis membrane sheet, and a third raw water channel is formed between front surfaces of the first long leaf of the first reverse osmosis membrane sheet and the second long leaf of the second reverse osmosis membrane sheet. The first inlet screen is inserted into the first raw water channel and the third raw water channel, and the second inlet screen is inserted into the second raw water channel.

In some embodiments, a back surface of the first short leaf of the first reverse osmosis membrane sheet and a back surface of the second short leaf of the second reverse osmosis membrane sheet are partially sealed to form a pure water channel whose end farther from to the folded edges is provided with a pure water outlet, and the first pure water guiding cloth is disposed between the back surface of the first short leaf of the first reverse osmosis membrane sheet and the back surface of the second short leaf of the second reverse osmosis membrane sheet.

In some embodiments, lengths of the plurality of long leaves are all equal, and lengths of the plurality of short leaves are all equal.

In some embodiments, a ratio of a length of a side of each of the short leaves perpendicular to the folded edge to a length of a side of each of the long leaves perpendicular to the folded edge is 1:3-3:4.

In some embodiments, a length of the first inlet screen is 1 mm-10 mm greater than the length of the side of each of the long leaves perpendicular to the folded edge.

In some embodiments, a length of the second inlet screen is 5 mm-10 mm greater than the length of the side of each of the short leaves perpendicular to the folded edge.

In some embodiments, a length of the first pure water guiding cloth is 1 mm-10 mm greater than the length of the side of each of the short leaves perpendicular to the folded edge.

In some embodiments, a size of the first reverse osmosis membrane sheet is identical to a size of the second reverse osmosis membrane sheet.

In some embodiments, a short side of the first pure water guiding cloth farther from the pure water outlet is connected with the central tube, and then the reverse osmosis membrane sheets, the inlet screens and the pure water guiding cloths that are bonded are wound around the central tube, such that outlets of wound raw water channels are oriented towards the central tube, and the pure water outlet of the pure water channels is located at an outer side.

In some embodiments, glue is applied to end surfaces of the reverse osmosis membrane sheets and the inlet screens after winding so as to partially seal the raw water channels, and a glue application position is closer to the central tube, such that raw water inlets are formed at positions of the end surfaces closer to the outer side.

In some embodiments, a length of the raw water inlets is 1/10-1/3 of a length of a side of the first long leaf adjacent to the folded edge.

According to the invention, a sectional area of a water inlet channel at a concentrated water side is reduced by folding the long and short leaves and winding the membrane, such that a flow velocity on a membrane surface at the concentrated water side can be improved, concentration polarization at the concentrated water side can be further slowed down, anti-pollution performance of the reverse osmosis membrane can be enhanced, and service life of a filter element of the reverse osmosis membrane can be prolonged.

The invention further includes a water purifier having the reverse osmosis membrane element.

As shown in Fig. 5, Example 5:
a spiral wound reverse osmosis membrane element includes a central tube, and a first reverse osmosis membrane sheet, a second reverse osmosis membrane sheet, a third reverse osmosis membrane sheet, a fourth reverse osmosis membrane sheet, a fifth reverse osmosis membrane sheet, a sixth reverse osmosis membrane sheet, a first inlet screen, a second inlet screen, a first pure water guiding cloth and a second pure water guiding cloth that are wound around the central tube.

Front surfaces of the first reverse osmosis membrane sheet and the second reverse osmosis membrane sheet are folded to form folded edges as well as two long leaves and two short leaves separated by the folded edges. A first raw water channel is formed between a first long leaf and a first short leaf of the first reverse osmosis membrane sheet, a second raw water channel is formed between a second long leaf and a second short leaf of the second reverse osmosis membrane sheet, and a third raw water channel is formed between front surfaces of the first long leaf of the first reverse osmosis membrane sheet and the second long leaf of the second reverse osmosis membrane sheet. The first inlet screen is inserted into the first raw water channel and the third raw water channel, and the second inlet screen is inserted into the second raw water channel.

Front surfaces of the third reverse osmosis membrane sheet and the fourth reverse osmosis membrane sheet are folded to form folded edges as well as two long leaves and two short leaves separated by the folded edges. A third raw water channel is formed between a third long leaf and a third short leaf of the third reverse osmosis membrane sheet, a fourth raw water channel is formed between a fourth long leaf and a fourth short leaf of the fourth reverse osmosis membrane sheet, and a fifth raw water channel is formed between front surfaces of the third long leaf of the third reverse osmosis membrane sheet and the fourth long leaf of the fourth reverse osmosis membrane sheet. The first inlet screen is inserted into the fourth raw water channel and the sixth raw water channel, and the second inlet screen is inserted into the fifth raw water channel.

Front surfaces of the fifth reverse osmosis membrane sheet and the sixth reverse osmosis membrane sheet are folded to form folded edges as well as two long leaves and two short leaves separated by the folded edges. A seventh raw water channel is formed between a fifth long leaf and a fifth short leaf of the fifth reverse osmosis membrane sheet, an eighth raw water channel is formed between a sixth long leaf and a sixth short leaf of the sixth reverse osmosis membrane sheet, and a ninth raw water channel is formed between front surfaces of the fifth long leaf of the fifth reverse osmosis membrane sheet and the sixth long leaf of the sixth reverse osmosis membrane sheet. The first inlet screen is inserted into the seventh raw water channel and the ninth raw water channel, and the second inlet screen is inserted into the eighth raw water channel.

A back surface of the first short leaf of the first reverse osmosis membrane sheet and a back surface of the second short leaf of the second reverse osmosis membrane sheet are partially sealed to form a pure water channel whose end farther from the folded edges is provided with a pure water outlet, and the first pure water guiding cloth is disposed between the back surface of the first short leaf of the first reverse osmosis membrane sheet and the back surface of the second short leaf of the second reverse osmosis membrane sheet.

A back surface of the second long leaf of the second reverse osmosis membrane sheet and a back surface of the third long leaf of the third reverse osmosis membrane sheet are partially sealed to form a pure water channel whose end farther from the folded edges is provided with a pure water outlet, and the second pure water guiding cloth is disposed between the back surface of the second long leaf of the second reverse osmosis membrane sheet and the back surface of the third long leaf of the third reverse osmosis membrane sheet.

A back surface of the third short leaf of the third reverse osmosis membrane sheet and a back surface of the fourth short leaf of the fourth reverse osmosis membrane sheet are partially sealed to form a pure water channel whose end farther from the folded edges is provided with a pure water outlet, and the first pure water guiding cloth is disposed between the back surface of the third short leaf of the third reverse osmosis membrane sheet and the back surface of the fourth short leaf of the fourth reverse osmosis membrane sheet.

A back surface of the fourth long leaf of the fourth reverse osmosis membrane sheet and a back surface of the fifth long leaf of the fifth reverse osmosis membrane sheet are partially sealed to form a pure water channel whose end farther from the folded edges is provided with a pure water outlet, and the second pure water guiding cloth is disposed between the back surface of the fourth long leaf of the fourth reverse osmosis membrane sheet and the back surface of the fifth long leaf of the fifth reverse osmosis membrane sheet.

A back surface of the fifth short leaf of the fifth reverse osmosis membrane sheet and a back surface of the sixth short leaf of the sixth reverse osmosis membrane sheet are partially sealed to form a pure water channel whose end farther from the folded edges is provided with a pure water outlet, and the first pure water guiding cloth is disposed between the back surface of the fifth short leaf of the fifth reverse osmosis membrane sheet and the back surface of the sixth short leaf of the sixth reverse osmosis membrane sheet.

In some embodiments, lengths of the plurality of long leaves are all equal, and lengths of the plurality of short leaves are all equal.

In some embodiments, a ratio of a length of a side of each of the short leaves perpendicular to the folded edge to a length of a side of each of the long leaves perpendicular to the folded edge is 1:3-3:4.

In some embodiments, a length of the first inlet screen is 1 mm-10 mm greater than the length of the side of each of the long leaves perpendicular to the folded edge.

In some embodiments, a length of the second inlet screen is 5 mm-10 mm greater than the length of the side of each of the short leaves perpendicular to the folded edge.

In some embodiments, a length of the first pure water guiding cloth is 1 mm-10 mm greater than the length of the side of each of the short leaves perpendicular to the folded edge.

In some embodiments, a length of the second pure water guiding cloth is 1 mm-10 mm greater than the length of the side of each of the long leaves perpendicular to the folded edge.

In some embodiments, sizes of the reverse osmosis membrane sheets are identical.

In some embodiments, short sides of the first pure water guiding cloth and the second pure water guiding cloth farther from the pure water outlet are connected with the central tube, and then the reverse osmosis membrane sheets, the inlet screens and the pure water guiding cloths that are bonded are wound around the central tube, such that the pure water outlet of the pure water channels after winding faces the central tube.

In some embodiments, glue is applied to end surfaces of the reverse osmosis membrane sheets and the inlet screens after winding so as to partially seal the raw water channels, and a glue application position is closer to the central tube, such that the raw water inlets are formed at positions of the end surfaces farther from the central tube.

In some embodiments, a length of the raw water inlets is 1/10-1/3 of a length of a side of the first long leaf adjacent to the folded edge.

According to the invention, a sectional area of a water inlet channel at a concentrated water side is reduced by folding the long and short leaves and winding the membrane, such that a flow velocity on a membrane surface at the concentrated water side can be improved, concentration polarization at the concentrated water side can be further slowed down, anti-pollution performance of the reverse osmosis membrane can be enhanced, and service life of a filter element of the reverse osmosis membrane can be prolonged.

The invention further includes a water purifier having the reverse osmosis membrane element.

The invention further provides a water purifier. The water purifier includes the spiral wound reverse osmosis membrane element according to any one of the embodiments.

What are described above are merely preferred examples of the invention, and not intended to limit the invention. Any modifications, equivalent replacements, improvements, etc. made within the spirit and principle of the invention should fall within the protection scope of the invention. What are described above are merely preferred embodiments of the invention. It should be noted that those skilled in the art can make several improvements and variations without departing from the technical principle of the invention, and these improvements and variations should fall within the protection scope of the invention.

## Claims

1. A spiral wound reverse osmosis membrane element, comprising:
a central tube (100), a first reverse osmosis membrane sheet (1), and a second reverse osmosis membrane sheet (2), wherein the first reverse osmosis membrane sheet (1) is bent to form a first long leaf (11), a first folded edge (13) and a first short leaf (12) that are sequentially connected, a length of the first long leaf (11) is greater than a length of the first short leaf (12), the second reverse osmosis membrane sheet (2) is bent to form a second long leaf (21), a second folded edge (23) and a second short leaf (22) that are sequentially connected, a length of the second long leaf (21) is greater than a length of the second short leaf (22), the first short leaf (12) and the second short leaf (22) are disposed oppositely, and the first reverse osmosis membrane sheet (1) and the second reverse osmosis membrane sheet (2) are stacked into a whole and then wound around the central tube (100); and a first raw water channel (201) is formed between a part of the first long leaf (11) and the first short leaf (12) that are disposed oppositely, a second raw water channel (202) is formed between a part of the second long leaf (21) and the second short leaf (22) that are disposed oppositely, a third raw water channel (203) is formed between a part of the first long leaf (11) extending beyond the first short leaf (12) and a part of the second long leaf (21) extending beyond the second short leaf (22) that are disposed oppositely, the first raw water channel (201) and the second raw water channel (202) are in communication with a raw water nozzle so as to feed raw water, water in the first raw water channel (201) and water in the second raw water channel (202) separately flow to the third raw water channel (203), and a sum of cross-sectional circulation areas of the first raw water channel (201) and the second raw water channel (202) is greater than a cross-sectional circulation area of the third raw water channel (203).

2. The spiral wound reverse osmosis membrane element according to claim 1, wherein
in a projective plane of an axial end surface of the central tube (100), the first short leaf (12) and the second short leaf (22) have an equal length of L2, and the first long leaf (11) and the second long leaf (21) have an equal length of L1, wherein L1>L2; and
an end of the first short leaf (12) and an end of the second short leaf (22) are disposed oppositely, the first folded edge (13) and the second folded edge (23) are disposed oppositely, and an end of the first long leaf (11) and an end of the second long leaf (21) are disposed oppositely.

3. The spiral wound reverse osmosis membrane element according to claim 2, wherein
the first raw water channel (201) and the second raw water channel (202) are provided with water inlets (401) on the axial end surface in an axial direction of the central tube (100) respectively, a length of the water inlets (401) in the projective plane of the axial end surface of the central tube (100) is L0, andL0<L2

4. The spiral wound reverse osmosis membrane element according to claim 3, wherein
1/3≤L2/L1≤3/4; and 1/10≤L0/L2≤1/2.

5. The spiral wound reverse osmosis membrane element according to claim 1, wherein
a first feed spacer (31) is further disposed in the first raw water channel (201) and the third raw water channel (203), one end of the first feed spacer (31) is connected with the first folded edge (13), an other end of the first feed spacer extends to a position opposite to an end of the first long leaf (11), and the first feed spacer (31) extends from the first raw water channel (201) to the third raw water channel (203); and a second feed spacer (32) is further disposed in the second raw water channel (202), one end of the second feed spacer (32) is connected with the second folded edge (23), an other end of the second feed spacer extends to a position opposite to an end of the second short leaf (22), and the second feed spacer (32) extends in the second raw water channel (202).

6. The spiral wound reverse osmosis membrane element according to claim 5, wherein
in a projective plane of an axial end surface of the central tube (100), a length of the first feed spacer (31) is not less than a length of the first long leaf (11), and a length of the second feed spacer (32) is greater than a length of the second short leaf (22).

7. The spiral wound reverse osmosis membrane element according to claim 1, wherein
a first feed spacer (31) is further disposed in the first raw water channel (201), one end of the first feed spacer (31) is connected with the first folded edge (13), an other end of the first feed spacer extends to a position opposite to an end of the first short leaf (12), and the first feed spacer (31) extends in the first raw water channel (201); and a second feed spacer (32) is further disposed in the second raw water channel (202) and the third raw water channel (203), one end of the second feed spacer (32) is connected with the second folded edge (23), an other end of the second feed spacer extends to a position opposite to an end of the second long leaf (21), and the second feed spacer (32) extends from the second raw water channel (202) to the third raw water channel (203).

8. The spiral wound reverse osmosis membrane element according to claim 7, wherein
in a projective plane of an axial end surface of the central tube (100), a length of the first feed spacer (31) is greater than a length of the first short leaf (12), and a length of the second feed spacer (32) is not less than a length of the second long leaf (21).

9. The spiral wound reverse osmosis membrane element according to any one of claims 1 to 8, wherein
a surface of the first long leaf (11) opposite to the first short leaf (12) is a front surface of the first long leaf (11), a surface of the first short leaf (12) opposite to the first long leaf (11) is a front surface of the first short leaf (12), and the first raw water channel (201) is formed between the front surface of the first long leaf (11) and the front surface of the first short leaf (12);
a surface of the second long leaf (21) opposite to the second short leaf (22) is a front surface of the second long leaf (21), a surface of the second short leaf (22) opposite to the second long leaf (21) is a front surface of the second short leaf (22), and the second raw water channel (202) is formed between the front surface of the second long leaf (21) and the front surface of the second short leaf (22); and
the third raw water channel (203) is formed between a front surface of the part of the first long leaf (11) extending beyond the first short leaf (12) and a front surface of the part of the second long leaf (21) extending beyond the second short leaf (22) that are arranged oppositely.

10. The spiral wound reverse osmosis membrane element according to claim 9, wherein
a first pure water channel (301) is formed between a back surface of the first short leaf (12) and a back surface of the second short leaf (22), the back surface of the first short leaf (12) is one side surface facing away from the first long leaf (11), pure water obtained by filtering and purifying raw water in the first raw water channel (201) through the first short leaf (12) enters the first pure water channel (301), and pure water obtained by filtering and purifying raw water in the second raw water channel (202) through the second short leaf (22) enters the first pure water channel (301); and
after the first reverse osmosis membrane sheet (1) and the second reverse osmosis membrane sheet (2) are stacked into a whole and wound around the central tube (100), a second pure water channel (302) is formed between a back surface of the first long leaf (11) and a back surface of the second long leaf (21), pure water obtained by filtering and purifying the raw water in the first raw water channel (201) through the first long leaf (11) enters the second pure water channel (302), pure water obtained by filtering and purifying the raw water in the second raw water channel (202) through the second long leaf (21) enters the second pure water channel (302), and pure water obtained by filtering and purifying raw water in the third raw water channel (203) through the first long leaf (11) and the second long leaf (21) enters the second pure water channel (302).

11. The spiral wound reverse osmosis membrane element according to claim 10, wherein
a first pure water guiding cloth (41) is further disposed in the first pure water channel (301), and a second pure water guiding cloth (42) is further disposed in the second pure water channel (302); and
in a projective plane of an axial end surface of the central tube (100), a length of the first pure water guiding cloth (41) is greater than the length of the first short leaf (12), and the length of the first short leaf (12) is equal to the length of the second short leaf (22); and a length of the second pure water guiding cloth (42) is greater than the length of the first long leaf (11), and the length of the first long leaf (11) is equal to the length of the second long leaf (21).

12. The spiral wound reverse osmosis membrane element according to claim 10, wherein
a first sealing member (51) is connected between the back surface of the first short leaf (12) and the back surface of the second short leaf (22), and a pure water outlet of the first pure water channel (301) is oriented towards the first folded edge (13); and a second sealing member (52) is connected between the back surface of the first long leaf (11) and the back surface of the second long leaf (21), and a pure water outlet of the second pure water channel (302) is oriented towards the first folded edge (13).

13. The spiral wound reverse osmosis membrane element according to claim 10, wherein
an end after the first folded edge (13) and the second folded edge (23) are stacked is an initial end wound around an outer peripheral wall of the central tube (100), an open end formed between an end of the first long leaf (11) and an end of the second long leaf (21) is a tail end wound around the central tube (100), the initial end is connected with the outer peripheral wall of the central tube (100), and the tail end is located radially outside the initial end; and the first pure water channel (301) and the second pure water channel (302) are in communication with an interior of the central tube (100), filtered and purified pure water is discharged from the interior of the central tube (100), and filtered and purified concentrated water flows out of the open end formed between the end of the first long leaf (11) and the end of the second long leaf (21).

14. The spiral wound reverse osmosis membrane element according to claim 10, wherein
an open end formed between an end of the first long leaf (11) and an end of the second long leaf (21) is stacked as an initial end wound around an outer peripheral wall of the central tube (100), an end after the first folded edge (13) and the second folded edge (23) are stacked is a tail end wound around the central tube (100), the initial end is connected with the outer peripheral wall of the central tube (100), and the tail end is located radially outside the initial end; and an opening between the end of the first long leaf (11) and the end of the second long leaf (21) is in communication with an interior of the central tube (100), filtered and purified concentrated water flows into the interior of the central tube (100) through the open end between the end of the first long leaf (11) and the end of the second long leaf (21), the first pure water channel (301) and the second pure water channel (302) are separately in communication with an exterior of the spiral wound reverse osmosis membrane element, and filtered and purified pure water is discharged out of the first pure water channel (301) and the second pure water channel (302) separately.

15. The spiral wound reverse osmosis membrane element according to any one of claims 1 to 14, wherein
the first reverse osmosis membrane sheet (1) and the second reverse osmosis membrane sheet (2) form a reverse osmosis unit, at least two reverse osmosis units are provided, and the at least two reverse osmosis units are stacked and integrally wound around the central tube (100).

16. A water purifier, comprising the spiral wound reverse osmosis membrane element according to any one of claims 1 to 15.
